# EUROPEAN PATENT APPLICATION

(11) **EP 4 534 855 A1**
(43) Date of publication of application: **09.04.2025**
(21) Application number: 23201293.0
(22) Date of filing: 02.10.2023
(51) Int. Cl.: F15B 19/00, B64F 5/40, B64F 5/60, F15B 21/08

(54) **HYDRAULIC SYSTEM FOR AN AIRCRAFT WITH PRESSURE SETTING FUNCTION, USE THEREOF AND METHOD FOR OPERATION**

(71) Applicant: Airbus Operations GmbH, 21129 Hamburg (DE)
(72) Inventor: Kaufmann, Alena, 21129 Hamburg (DE); Hamm, Martin, 21129 Hamburg (DE); Trochelmann, Nils, 21129 Hamburg (DE)
(74) Representative: KASTEL Patentanwälte PartG mbB

(57) **Abstract**

For providing a more autonomous hydraulic system (12), and especially for reducing effort and costs during maintenance or ground services, the invention proposes an onboard hydraulic system (12) for an aircraft (10), comprising a motor-pump unit (14) comprising an electric motor (16) and a hydraulic pump (18) driven by the motor (16), a hydraulic consumer (24) supplied with pressurized hydraulic fluid from the motor-pump unit (14), a fluid reservoir ,(20) a pressure sensor (28) for sensing pressure of the pressurized hydraulic fluid, a control unit (26) for controlling the motor-pump unit (14), and a pressure setting means (38) for adapting a pressure setting of the motor-pump unit (14) for ground service or maintenance or specific flight conditions.

## Description

The invention relates to an onboard hydraulic system for an aircraft. Further, the invention relates to uses of such a hydraulic system for different maintenance, testing and ground service operations as well as for power distribution in different subsystems. Further, the invention relates to a method for operating such hydraulic system, especially for conducting different maintenance, testing and ground service operations as well as - optionally - for power distribution in different subsystems. Still further, the invention relates to a control unit and a computer program for such a hydraulic system as well as to an aircraft equipped therewith.

A hydraulic system uses a fluid under pressure to drive machinery or move mechanical components. Practically all aircraft make use of some hydraulically powered components. In an aircraft a single hydraulic system or two or more hydraulic systems working together might be used to power any or all of the following components: wheel brakes, nose wheel steering, landing gear retraction/extension, flaps and slats, thrust reversers, spoilers/speed brakes, flight control surface, cargo doors/loading ramps, windshield wipers, and so on. Generally, a hydraulic system includes a power source in form of a hydraulic pump, a hydraulic consumer, e.g., in form of a hydraulically driven "motor" (e.g., rotary motor or linear motor such as a hydraulic cylinder) which powers the hydraulically driven component and a hydraulic distribution system which contains and channels the fluid throughout the aircraft as required. In most aircrafts as present on market, the hydraulic pumps are engine driven pumps (EDP) mounted on the engine accessory gear box and powered when the engines are running. In addition, some pumps - mostly for back-up power - are driven by electric motors at constant speeds.

Thus, today aircraft's hydraulic systems are continuously running during all flight phases under a nominal system design operation pressure (DOP, also referred to as nominal system operation pressure or nominal pressure in the following).

For technical background, reference is made to the following literature:
[1] Hydraulic Ground Power Unit - Mainline Aircraft - 3000psi and 5000psi, company brochure of Test-Fuchs GmbH, downloaded from internet under www.test-fuchs.com on 29-08-2023

Today's ground maintenance concepts for hydraulic systems of aircraft rely on the usage of ground support equipment available at airfields, like hydraulic ground carts, an example thereof is disclosed in [1]. Procurement, logistics and usage of these ground carts are significant for airfield operators. If the ground cart is not available at the aircraft's location, delays will be the result. Maintenance personnel needs to operate the ground cart and intervene during certain maintenance procedures.

Actual aircraft's hydraulic systems are autonomous and work at a fixed pressure set point whenever the aircraft is in a flight condition. For maintenance tasks the operator needs to attach a hydraulic ground cart to the aircraft in order to not require an engine start. An engine start for ground operation should be avoided for different reasons and is forbidden at some airfields. For some tests, components have to be removed from the hydraulic system for testing them on a test bench rather than on the aircraft.

An object of the invention is to provide an enhanced, especially more autonomous, hydraulic system, preferably such that time and costs for certain maintenance or test procedures during ground service and/or thermal loads during specific ground services and/or flight modes can be reduced.

For achieving such object, the invention provides a hydraulic system according to claim 1. Uses of such hydraulic system, an operation method of such hydraulic system, a control unit and a computer program for such hydraulic system as well as an aircraft provided with such hydraulic system are subject-matters of the further independent claims.

Advantageous embodiments are subject-matters of the dependent claims.

The invention provides according to a first aspect thereof an onboard hydraulic system for an aircraft, comprising
a motor-pump unit comprising an electric motor and a hydraulic pump driven by the motor, a hydraulic consumer supplied with pressurized hydraulic fluid from the motor-pump unit, a fluid reservoir, a pressure sensor for sensing pressure of the pressurized hydraulic fluid, a control unit for controlling the motor-pump unit, and a pressure setting means for adapting a pressure setting of the motor-pump unit for ground service or maintenance or specific flight conditions.

Preferably the control unit uses pressure data and controls the motor-pump unit respectively. Such, the control unit goes beyond the pure motor-pump control.

In some embodiments, the control unit is configured to control the motor-pump unit in a first flight mode (such as a normal flight mode) to supply the pressurized hydraulic fluid with a nominal system operation pressure and in a ground service and/or maintenance and/or testing mode and/or a second flight mode (especially a specific flight mode, e.g., long cruise) to supply the pressurized hydraulic fluid with a pressure different to the nominal system operation pressure and set by the pressure setting means.

Preferred embodiments use various/different pressure settings in flight mode and on ground. In some embodiments, the settings do not need to be different in flight and on ground. The pressure setting is depending on the purpose/function of a special use situation.

Preferably, the pressure setting means is configured to set a pressure higher than the nominal pressure for testing a consumer function.

Preferably, the pressure setting means is configured to set a pressure higher than the nominal pressure and below a hydraulic system relief pressure in order to test an internal relief valve of the hydraulic consumer connected to the motor-pump unit.

Preferably, the pressure setting means is configured to set a pressure lower than the nominal pressure for ground service, maintenance, or testing.

Preferably, the pressure setting means is configured to set a pressure lower than the nominal pressure during ground service and changing to nominal pressure during ground service on demand of at least one of several hydraulic consumers.

In some embodiments, the hydraulic system comprises a first subsystem with a first motor-pump unit for supplying the first subsystem with pressurized fluid and a second subsystem with a second motor-pump unit for supplying the second subsystem of the hydraulic system with pressurized fluid, the first and second motor-pump units being controlled by the control unit, wherein the control unit is configured for controlling the first and second motor-pump units during a flight mode such that one of the motor-pump units supplies hydraulic fluid with nominal pressure and the other supplies hydraulic fluid with a different pressure set by the pressure setting means.

Preferred embodiments of the control unit are configured as control and monitoring unit for controlling the hydraulic system and for monitoring the function and/or one or several operation parameters thereof, especially motor speed, pump displacement, pressure of the hydraulic fluid supplied and/or temperature of the hydraulic fluid. Especially, the hydraulic system has sensors for detecting such parameter which are communicatively connected to a computer of the control and monitoring unit.

In some embodiments, the control unit comprises the pressure setting means, especially as part of a control or program routine or in form of a computer program. In some embodiments, the pressure setting means may comprise a user interface configured such that an operator or user can set the pressure or can choose the pressure from several predefined pressure levels. In some embodiments, the pressure setting means is configured to set one of a plurality of predefined pressure values or pressure levels in response to activation of a predefined maintenance or testing mode. Hence, the operator may activate a predefined testing mode such as for testing an internal pressure relief valve of one of several hydraulic consumers, e.g., a special actuator for driving one of the hydraulically driven aircraft components, and the pressure setting means that may be part of the control routine initiated in this testing mode sets a pressure suitable for testing the internal relief valve.

In preferred embodiments, the pressure setting is automatically adapted (a uses action is possible but not needed). For example, with the aircraft being in taxi condition (on ground, heading towards runway or returning from runway) the amount of hydraulic power is low. The internal system leakage is heating up the system - the amount of heating is proportional to the differential pressure between high pressure supply (HP) and low-pressure return (LP). If the controller detects "aircraft on ground, low power required" it can automatically reduce the outlet pressure of the pump to reduce internal leakage heating effects (lower delta pressure).

In some embodiments, the motor-pump unit or at least one of several motor-pump units of the hydraulic system is a hydraulic power pack including the electric motor, the pump and the reservoir.

A hydraulic power pack (sometimes referred to as a hydraulic power unit) is a selfcontained system that usually includes a motor, a fluid reservoir, and a pump. It works to apply the hydraulic pressure needed to drive hydraulic consumers such as motors, cylinders, and other complementary parts of a given hydraulic system. One advantage of such hydraulic power packs is that they can be arranged locally near the hydraulic consumer and can be powered electrically so that there is no need of large hydraulic fluid distribution lines. Another advantage is that the hydraulic system comprising the hydraulic power pack can be powered on demand, i.e., the power pack can be off during some flight phases and only be turned on once a consumer need is present.

In some embodiments, the motor-pump unit or at least one of several motor-pump units of the hydraulic system is an electric motor pump (EMP).

In some embodiments, the motor-pump unit or at least one of several motor-pump units of the hydraulic system is a motor-pump unit of fixed displacement type and speed-controlled motor.

In some embodiments, the motor-pump unit or at least one of several motor-pump units of the hydraulic system is a motor-pump unit with fixed motor speed and controlled variable displacement.

In some embodiments, the motor-pump unit or at least one of several motor-pump units of the hydraulic system is a motor-pump unit with controlled variable displacement and controlled motor speed.

In some embodiments, the hydraulic system is used for testing a function of the hydraulic consumer, especially testing function of an internal consumer pressure relief valve.

In some embodiments, the hydraulic system is used for operation of consumer(s) with a flow and/or pressure that is lower as a nominal flow and nominal pressure, respectively.

In some embodiments, the hydraulic system is used for reducing heat load of the hydraulic system when the aircraft is on ground. In some embodiments the hydraulic system is used for reducing heat load of the hydraulic system in specific flight modes.

In some embodiments, the hydraulic system is used for managing power consumption and/or power sharing between several parts of the hydraulic system.

According to another aspect, the invention provides a method for operating a hydraulic system according to any of the aforementioned embodiments, comprising at least one or several of the steps:
a) testing a function of the hydraulic consumer, especially testing function of an internal consumer pressure relief valve;
b) operating of consumer(s) with a flow and/or pressure that is lower as a nominal flow and nominal pressure, respectively;
c) operating of consumer(s) with a pressure lower than nominal pressure for reducing heat load of the hydraulic system when the aircraft is on ground;
d) managing power consumption and/or power sharing between several parts of the hydraulic system, especially during flight.

Preferably, step a) comprises the step:
a1) setting the pressure in dependence of the function to be tested.

Preferably, step a) comprises the step:
a2) setting the pressure to a level above nominal pressure but below system relief pressure.

Preferably, step a) comprises the step:
a3) controlling a motor speed and/or pump displacement of the motor-pump unit so that it supplies hydraulic fluid at a pressure at or above a relief pressure of the internal pressure relief valve of the consumer.

Preferably, step a) comprises the step:
a4) detecting a pressure and/or flow change in a supply line for supplying the consumer to be tested.

Preferably, step a) comprises the step:
a5) isolate the consumer to be tested from other consumers in the hydraulic system.

Preferably, step a) comprises the step:
a6) conducting the test automatically under control of the control unit.

Preferably, step b) comprises the step:
b1) controlling a motor speed and/or pump displacement of the motor-pump unit so that it supplies hydraulic fluid at a lower pressure significantly below the nominal system operation pressure.

Preferably, step b) comprises the step:
b2) feed-back control of the motor-pump unit in order to maintain the lower pressure set by the pressure setting means.

Preferably, step b) comprises the step:
b3) controlling a motor speed and/or pump displacement of the motor-pump unit so that it supplies hydraulic fluid at a pressure that raises and/or decreases at a given rate.

Preferably, step b) comprises the step:
b4) moving the consumer with reduced pressure and/or reduced flow.

Preferably, step b) comprises the step:
b5) checking pressure tightness of the hydraulic system at a reduced pressure level or with an increasing pressure.

Preferably, step c) comprises the step:
c1) reducing the pressure whenever the aircraft is on ground and no application with nominal pressure is required.

In some embodiments, step c1) comprises a regulation of the pressure such that the consumers receive minimum power (pressure, flow) to keep the neutral position. E.g., an elevator control faces actuator will be pressurized just enough to keep the control surface in neutral (centre) position. With no air loads on it (as typically the case on ground) this pressure can be much lower than in a flight condition. Preferably, an automatic reverting to nominal pressure is conducted in reply to a monitoring of the position of such actuators (i.e., control signal or position signal) and or flight phase, aircraft speed, etc. (not limited).

Preferably, step c) comprises the step:
c2) reverting to nominal pressure when the consumer or at least one of several consumers is requiring it.

Preferably, step c) comprises the step:
c3) detecting fluid temperature and setting the pressure in dependence from the detected fluid temperature.

Preferably, step c) comprises the step:
c4) determining a flight status or flight phase of the aircraft and/or whether the aircraft is on ground.

Preferably, step c) and/or step c4) comprise the step:
c4.1) monitoring the position of at least one or several of flight control elements or flight control faces.

Preferably, step c) comprises the step:
c5) detecting whether the hydraulic system is running.

Preferably, step c) comprises the step:
c6) detecting whether the temperature of the fluid in the hydraulic system is within a predefined range and if it is too low allowing warming before setting the reduced pressure.

Preferably, step c) comprises the step:
c7) determining if any consumer operation is foreseen and/or anticipating consumer operation.

Preferably, step c) comprises the step:
c8) reducing the pressure setting to less than half, preferably between 0.25 and 0.4 times, of the nominal pressure to slow down warming of the fluid by internal leakage.

Preferably, step c) comprises the step:
c9) changing a motor-pump unit control threshold for the pressure.

Preferably, step c) comprises the step:
c10) informing connected systems about the pressure reduction in order to avoid triggering of low-pressure alerts.

Preferably, step c) comprises the step:
c11) in case of change of the flight phase returning to nominal pressure, preferably by resetting a motor-pump unit control threshold.

Preferred embodiments of the control unit contain controlling modes for conduction the steps a), b), or c) and optionally step d). Preferred embodiments of the control unit are configured as control and monitoring unit for controlling the hydraulic system and for monitoring the function and/or one or several operation parameters thereof, especially motor speed, pump displacement, pressure of the hydraulic fluid supplied and/or temperature of the hydraulic fluid.

Preferably, step d) comprises the step:
d1) reducing pressure in one sub-system while maintaining full pressure in the other system.

Preferably, step d) comprises the step:
d2) sharing the power between subsystems to balance usage and/or thermal loading and/or wear and/or to adapt electric power network restrictions.

Preferably, step d) comprises the step:
d3) controlling the motor-pump unit in the sub-system with reduced pressure depending from at least one pressure threshold set by the pressure setting means.

In the following, advantages of one or several of the steps d), d1), d2) and/or d3) are explained. In some embodiments, flight control actuations in the aircraft work as follows. For many flight control surfaces there are more than one actuator. These actuators are usually located in different hydraulic systems (this increases availability/redundancy). Let's assume a first actuator is in a first hydraulic system and a second actuator is in a second hydraulic system. For example, both the first and second actuators are connected to the left aileron. Further, let's assume that the first actuator is powered whereas the second actuator is in "standby" (only one actuator is required to move the surface). If it is detected that the first hydraulic system is providing a lot of power, while the second hydraulic system is only in minimum power configuration it would make sense to supply the second actuator instead of the first actuator whereby shifting loads from the first hydraulic system to the second hydraulic system.

In some embodiments of the hydraulic system, the setting means is part of the control unit.

Preferably, the control unit is configured to cause the hydraulic system to conduct one or several of the uses as mentioned above. Preferably, the control unit is configured to cause the hydraulic system to automatically carry out the steps of the method according to any of aforementioned embodiments.

According to another aspect, the invention provides a control unit for a hydraulic system according to any of the aforementioned embodiments, wherein the control unit is configured to control the hydraulic system in one or several of the uses as mentioned above and/or to carry out the steps of the method according to any of the aforementioned embodiments.

Preferred embodiments of the control unit contain controlling modes for conduction the steps a), b), or c) and optionally step d). Preferred embodiments of the control unit are configured as control and monitoring unit for controlling the hydraulic system and for monitoring the function and/or one or several operation parameters thereof, especially motor speed, pump displacement, pressure of the hydraulic fluid supplied and/or temperature of the hydraulic fluid.

According to another aspect, the invention provides a computer program containing instructions that cause a hydraulic system according to any of the aforementioned embodiments to carry out the method according to any of the aforementioned embodiments.

According to another aspect, the invention provides an aircraft comprising a hydraulic system according to any of the aforementioned embodiments and/or a control unit according to any of the aforementioned embodiments.

Preferred embodiments of the invention relate to different pressure settings in hydraulic power packs. Preferred embodiments relate to hydraulic systems in aircraft that are powered by hydraulic power packs (also referred to as HPP in the following) and/or electric motor pumps (also referred to as EMP in the following).

Main targets for such hydraulic systems are modern aircraft with a more electric aircraft control - a flight control architecture that mainly relies on electric power for powering flight controls - such as this is intended in electrically and/or hydrogen powered aircraft, e.g., the ZEROe aircraft of Airbus or in new generations of single aisle aircrafts such as the Next Single Aisle (NSA) of Airbus.

Preferred embodiments are a key element for a new strategy towards an autonomous hydraulic system. The idea is that with an aircraft power pack that features several maintenance related functions the operator can ease the maintenance or even does not need any external device (e.g., ground carts) for maintaining the hydraulic system any longer.

A second possible application of preferred embodiments of the invention relate to the reduction of the hydraulic system's heat load through lower / adaptive pressure set points.

While today hydraulic ground carts are needed to power the hydraulic system during ground service and, for some tests, components have to be removed from the hydraulic system for testing them on a test bench rather than on aircraft, preferred embodiments of the invention provide the possibility to reduce or eliminating the use of hydraulic ground carts and the need to remove components for outside-the-aircraft hydraulic tests.

Today's state of the art in aerospace hydraulic systems are variable displacement pumps such as EDPs (variable displacement pump, pressure compensated, connected to engine gearbox) or EMPs (electro motor pumps, mostly variable displacement, fixed rotational speed, electrically powered). Such pumps have no feature to control the pressure freely/independently - they are usually pressure compensated by a hydro-mechanically regulated control valve adjusting the swash plate angle (flow control). For EMP there are so-called soft-cutoff controls (hydromechanical) that allow to lower the pressure at higher flow rates to limit the required power. However, there is no flexibility to adjust the pump characteristic on demand.

In contrast to this, embodiments of the invention provide the possibility to adapt the pressure setting from the pump in accordance with the needs of maintenance and specific system operational scenarios, namely:
1. testing of consumer functions, e.g., internal consumer pressure relief valve test function;
2 low flow / low pressure operation of consumers.

In addition, in some embodiments, the reduction of pressure can be used to
3. reduce the heat load of the system when the aircraft is on ground or in specific flight scenarios;
4. optionally: optimize power consumption/sharing between (sub-)systems (in flight, e.g., specific flight scenarios, or on ground).

Embodiments of the invention are explained below referring to the accompanying drawings in which:
- Fig. 1: a side view of an aircraft during ground service;
- Fig. 2: a perspective view of the aircraft wherein several parts of a hydraulic system are indicated; and
- Fig. 3: a schematical, simplified block diagram of a hydraulic system of the aircraft

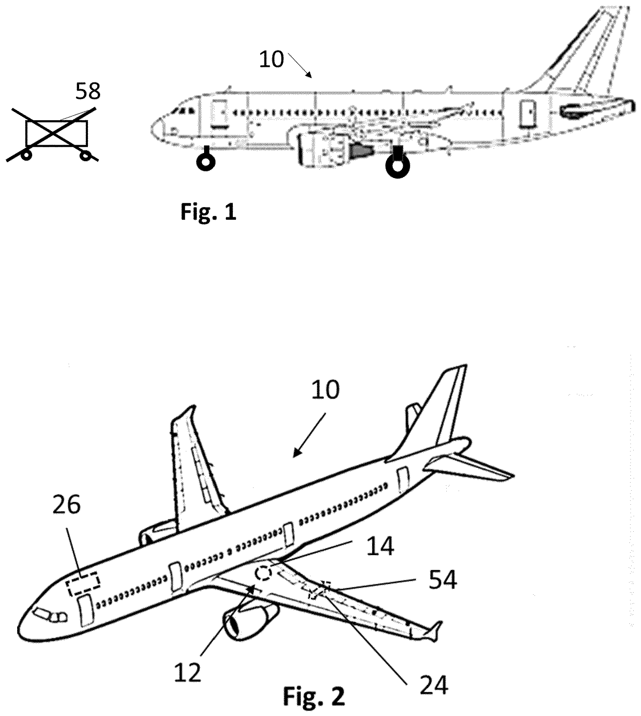

Fig. 1 to 3 show embodiments of an aircraft 10 having a hydraulic system 12. The hydraulic system 12 comprises, onboard of the aircraft 10, a motor-pump unit 14, including an electric motor 16 and a hydraulic pump 18 driven by the motor 16, a hydraulic reservoir 20, a hydraulic conduct system 22, a hydraulic consumer 24, and a control unit, here in form of a control and monitoring unit 26.

Further, the hydraulic system 12 comprises a pressure sensor 28 for sensing a pressure of the pressurized hydraulic fluid supplied from the motor-pump unit 14. In some embodiments, the hydraulic system 12 comprises further sensors 30 for sensing further parameters of the hydraulic system 12, especially a temperature.

In some embodiments, the motor-pump unit 14 is a hydraulic power pack 32 which comprises the electric motor 16, the hydraulic pump 18 and the fluid reservoir 20. In some embodiments, the motor-pump unit 14 is an electrically driven pump EMP 34.

In some embodiments, the hydraulic system 12 comprises several sub-systems 36.1, 36.2 that can be isolated from each other, wherein each sub-system comprises at least one hydraulic consumer 24 and one motor-pump unit 14 supplying this at least one hydraulic consumer 24 with pressurized fluid. For example, the hydraulic consumer 24 of the first sub-system 36.1 is a first actuator for actuating a flight control surface 54 (see Fig. 2), and the hydraulic consumer 24 of the second sub-system 36.2 is a second actuator for actuating the same flight control surface 54. In some embodiments (not shown), the systems 36.1, 36.2 work independent from each other, i.e., have no hydraulic connection therebetween.

The motor-pump unit(s) 14 is/are controlled by the control and monitoring unit 26 in different modes such that the motor-pump unit 14 supplies the hydraulic fluid at a predefined pressure. In a normal operation mode during flight, the control and monitoring unit 26 controls the motor-pump unit(s) 14 such that it supplies the fluid at a nominal system operation pressure (DOP), also referred to as nominal pressure in the following.

The hydraulic system 12 further comprises a pressure setting means 38 for adapting the pressure at which the fluid is supplied by the motor-pump unit(s) 14. The control and monitoring unit 26 controls the rotational speed of the electric motor 16 and/or a variable displacement of the pump 18 in order to adapt the pressure.

In some embodiments, the control and monitoring unit 26 is a computer having a processor 40 and a memory 42 containing computer programs with instructions that cause the hydraulic system 12 to carry out the steps for operating the hydraulic system 12 as explained in more detail below.

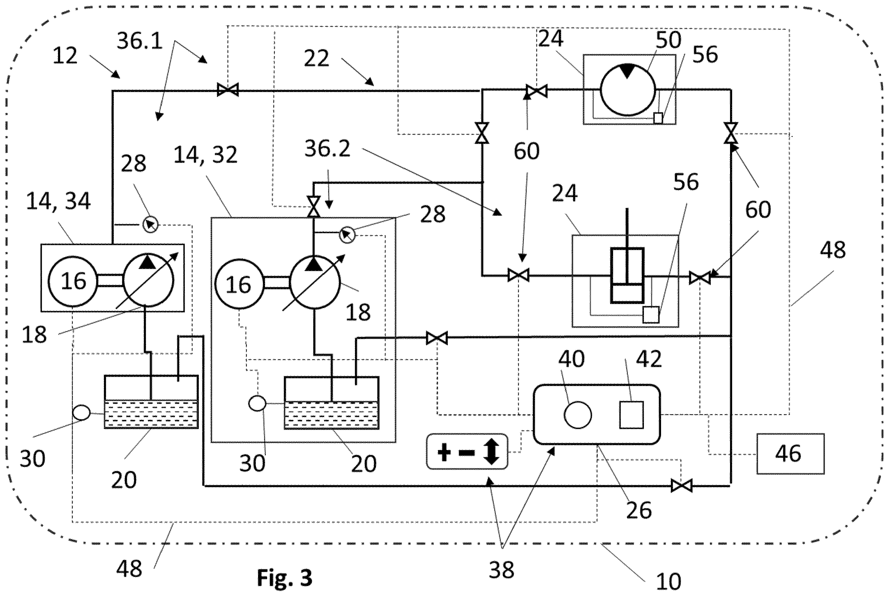

The pressure setting means 38 can be implemented as software - especially as part of the operation computer program stored in the memory - or as hardware. In Fig. 3, a (e.g., graphical) user interface 44 is indicated as one example where an operator can manually set a pressure as wished or can choose one of several predefined pressure levels or can activate a wished mode in which the hydraulic system shall be operated, such as a flight mode, a long cruise mode, a ground service mode, or several maintenance and test modes. In some embodiments, activation of a special mode automatically leads to setting a predefined pressure adapted to this mode, e.g., as explained in more detail below.

In the embodiment shown in Fig. 3, the control and monitoring unit 26 further is connected to a data providing system 46 that supplies information about the actual flight phase of the aircraft 10, such as "on ground", "taxi", "flight", "start", "landing", "long cruise". In some embodiments, the data providing system 46 provides data about the position of flight control surface(s) 54 actuated by means of the hydraulic system 12.

Communication connections 48 for connecting the control and monitoring unit 26 to different actors, sensors or other components of the hydraulic system 12 are depicted as thin dashed lines in Fig. 3; this communication connections 48 can be implemented by wires, bus systems, networks, radio communication connections or any other usual communication connection.

In some embodiments of the aircraft 10, a single hydraulic system 12 or two or more hydraulic systems 12 or subsystems 36.1, 36.2 working together might be used to power any or all of the following components: wheel brakes, nose wheel steering, landing gear retraction/extension, flaps and slats, thrust reversers, spoilers/speed brakes, flight control surface, cargo doors/loading ramps, windshield wipers, and so on. The motor-pump unit 14 works as a power source to power a hydraulic consumer 24, e.g., in form of a hydraulically driven "motor" 50 or of a hydraulic cylinder 52, working as hydraulic actuators to power one of the aforementioned hydraulically driven component, e.g., flight control actuators for actuating flight control surfaces 54. Such hydraulic actuators usually have, for safety reasons, an internal pressure relief valve 56.

In the following methods for conducting several maintenance, ground service and test procedures using the hydraulic system 12 are explained.

In the hydraulic system 12 according to embodiments of the invention pressure settings can be adjusted to different scenarios such as
1. testing of consumer functions, e.g., internal consumer pressure relief valve test function;
2. low flow / low pressure operation of consumers. (In addition, in some embodiments, a reduced pressure can be set to)
3. reduce the heat load of the system when the aircraft is on ground or in specific flight scenarios;
4. optionally: optimize power consumption/sharing between (sub-)systems (on ground or during flight).

The hydraulic system 12 has at least one hydraulic pump 18. This may be the EMP 34 or the pump 18 of the HPP 32. The motor-pump unit 14 is able to provide variable output flow in order to enable different set points. This could be realized through, e.g., a variable motor speed, a variable pump displacement or a combination of both. Further, a function of flexible (e.g., electronic) control of the pump output flow is provided.

A pressure setting function for the hydraulic system is explained by way of an example for the embodiment shown in Fig. 3 comprising an EMP 34 concept with variable speed motor 16 and fixed displacement pump 18. The hydraulic system 12 has the pressure sensor(s) 28 for monitoring the pressure.

The control and monitoring unit 26 is configured to control the pressure setpoint, processing the data and providing feedback to the aircraft system(s) and the operator.

Further, the hydraulic system 12 has, in the embodiment shown, shut-off means 60 for separating individual consumers 24 or consumer groups.

In the embodiment shown, the control and monitoring unit 26 is further configured to monitor the fluid temperature using the sensors 30.

### 1. Testing of consumer functions, e.g., internal consumer pressure relief valve test function:

In the following, the testing of a consumer 24 is described using the example of testing an internal pressure relief valve 56 and using an EMP 34 with variable speed and fixed displacement pump, but generally, different tests for consumer 24 functions can be performed using pressure settings adapted to the specific test. As mentioned above, in some embodiments, the pump flow is controlled additionally or alternatively by controlling the displacement of a variable displacement pump used as the pump 18.

As mentioned above, actual flight control actuators feature an internal pressure relief valve 56. For testing of this relief valve 56 the present procedure is to remove the actuator from the aircraft 10 and the relief function is tested on a test bench. When no failure is found, it is re-installed into the aircraft 10. The function cannot be tested in state-of-the art aircrafts as the pressure setting of current pumps cannot be changed. The pressure needs to be increased to above nominal system operating pressure but below the system relief pressure.

In preferred embodiments, the hydraulic system 12 can operate in a test mode for testing of consumer functions, e.g., in a mode for an internal consumer pressure relief valve test function. This mode can be conducted especially during ground service and without need of a ground cart 58.

With embodiments of the hydraulic system 12, of the control and monitoring unit 26, of the computer program and especially of the pressure setting means 38 a test of the flight control actuators internal relief valve 56 can be conducted while the actuator remains installed in the aircraft 10.

In an exemplary embodiment, the test is conducted as follows. In case that more than one consumer 24 are present in the hydraulic system 12, the consumer 24 (or the consumer group) to be tested is isolated from the other consumers using the shut-off means 60, but is still connected to the motor-pump unit 14 so that it can be supplied with the pressurized fluid.

The hydraulic system 12 has a system relief valve (not shown) set to the system relief pressure; in case that the system relief pressure is achieved, the system relief valve will crack and the pressure is lost. Hence, for conducting the test, the pressure is raised above nominal pressure but below system relief pressure.

Under control by the control and monitoring unit 26, the speed of the motor 26 of the motor-pump unit 14 is controlled such that it reaches a pressure at or slightly above the internal actuator relief pressure. If this is reached, the internal relief valve 56 will crack, and the resulting pressure drop or the change in flow will be detected by the control and monitoring unit 26. If no cracking occurs the test is stopped/aborted after a confirmation time and reported as unsuccessful via the control and monitoring unit 26.

The shut-off means 60 is used to isolate each consumer and to open for the individual consumer to be tested. Thus, cracking pressure of multiple consumers 24 in the hydraulic system can be performed. The procedure can be foreseen to be done automatically if the shut-off means 60 can be controlled remotely by the control and monitoring unit 26.

Usually, the internal relief valve 56 opens a path from the HP side to the LP side, internally i.e., inside the consumer 24 (actuator).

In some embodiments, the test function comprises: Increase the pressure to the cracking pressure of this internal relief valve 56 and allow a time limited relief from HP to LP - which is sensed by a difference in flow and/or pressure characteristics. The other consumers 24 are isolated - via isolation means 60 - for this test, so that it can be used to detect the correct function of the relief valve 56 of the targeted actuator.

Thus, in some embodiments, the isolation means 60 are used to test individual consumers 24. Some embodiments of the hydraulic system12 or test function do not have/use the isolation means 60 but use other means to individually trigger the internal relief valves 56 (e.g., by different cracking pressure setting).

### 2. Low flow / low pressure operation of consumers:

Today's hydraulic pumps in prior art aircraft are controlled to nominal pressure only. For certain procedures the ground cart 58 can be used for a setting of lower pressure, e.g., when a consumer 24 needs to be moved slowly or when slowly checking pressure tightness of the hydraulic system 12.

With embodiments of the hydraulic system 12, of the control and monitoring unit 26, of the computer program and especially of the pressure setting means 38 aircraft internal systems, components and means can be tested with lower adjustable pressure setting. Hence, such ground service and maintenance or testing procedures are possible without the need of a ground cart 58.

In the embodiment shown, a ground service, maintenance or testing mode can be adapted with an adjusted pressure lower than the nominal pressure. The adapted pressure is either automatically or manually set by the pressure setting means 38.

The speed of the motor 16 of the motor-pump unit 14 is controlled such that the motor-pump unit 14 output pressure is significantly below the nominal system design operating pressure (DOP, nominal pressure). The pressure setting can be controlled by the control and monitoring unit 26 in accordance with the needs of the ground service/maintenance procedure. In some modes, a constant lower pressure is set, for example for moving a component at lower speed. Instead of a constant (lower) pressure, the feature can also be used to do "pressure sweeps", i.e., pressure raise or decrease at a given rate. For example, with adjusting a pressure that raises slowly, the fluid tightness of the hydraulic system can be tested.

### 3. Reduce the heat load of the system when the aircraft is on ground:

Today's system internal leakage is the main contributor for heat in the hydraulic system. Internal leakage cannot be controlled or reduced as it is a given for the servo valves that are used in actuators.

By setting adapted pressure in embodiments of the invention, a reduction of pressure is possible whenever the aircraft is on ground and no application with nominal pressure is required. The hydraulic system 12 (or a sub-system 36.1, 36.2 thereof) will revert to high pressure (e.g., the nominal pressure) when a consumer 24 requires this. In most embodiments, the function is not used in flight as there is sufficient cooling and the full power needs to be available for performance and eventually safety reasons.

The function of setting of lower pressure whenever possible or suitable allows for thermal optimization and power consumption optimization.

A possible embodiment for implementing this feature/mode is now explained in more detail. For this feature, a measurement of the internal leakage is not required. The following order of steps is conducted, preferably automatically:
aa) The control and monitoring unit 26 determines the flight phase the aircraft 10 is in - if it is on ground and the hydraulic system 12 is running.
bb) The control and monitoring unit 26 checks that the fluid temperature in the hydraulic system 12 is in a normal range. If the hydraulic system 12 is cold, the control and monitoring unit 26 will allow warming before using the pressure setting function.
cc) The control and monitoring unit 26 determines if any consumer operation is foreseen - anticipate operation.
dd) the control and monitoring unit 26 reduces the pressure setting to about 1/3 of nominal pressure to slow down warming of the fluid by internal leakage - reduced energy loss is the result. The motor pump control threshold for the pressure is changed.
ee) The control and monitoring unit 26 informs connected systems about the pressure reduction in order to avoid triggering low pressure alerts.
ff) Once the flight phase is changed the control and monitoring unit 26 checks and reverts to nominal pressure via resetting the motor pump control threshold.

### 4. Option: optimize power consumption/sharing between (sub-)systems:

In most embodiments, as a baseline, the function as explained under point 3. above will not be available in flight as there is sufficient cooling and the full power may be needed for performance reasons.

In some embodiments, a reduction of pressure in flight may also be useful with regard to energy consumption and stress load.

If more than one hydraulic system 12 is used - indicated exemplarily by the subsystems 36.1, 36.2 in Fig. 3 - to power flight controls - such as the flight control surfaces 54 - a pressure reduction in one system 36.1 while maintaining full pressure in the other system 36.2 could be envisaged during flight also. This would result in less energy consumption and lower heat loading of the hydraulic (sub-)system 36.2 with reduced pressure.

Thus, as an option, the function as described above under point 3. is available in flight in some embodiments, as there is potential, e.g., during long cruise phases, to optimize the power sharing between systems 36.1, 36.2 to balance usage, thermal loading, wear, and/or maybe even to adapt to electric power network constrictions.

For providing an enhanced, especially more autonomous, hydraulic system (12), and especially for reducing effort and costs during maintenance or ground services, the invention proposes an onboard hydraulic system (12) for an aircraft (10), comprising
a motor-pump unit (14) comprising an electric motor (16) and a hydraulic pump (18) driven by the motor (16), a hydraulic consumer (24) supplied with pressurized hydraulic fluid from the motor-pump unit (14), a fluid reservoir ,(20) a pressure sensor (28) for sensing pressure of the pressurized hydraulic fluid, a control unit (26) for controlling the motor-pump unit (14), and a pressure setting means (38) for adapting a pressure setting of the motor-pump unit (14) for ground service or maintenance or specific flight conditions.

### Reference sign list:

- 10: aircraft
- 12: hydraulic system
- 14: motor-pump unit
- 16: motor
- 18: pump
- 20: reservoir
- 22: conduct system
- 24: consumer
- 26: control and monitoring unit
- 28: pressure sensor
- 30: sensor (e.g., for detecting temperature of fluid)
- 32: hydraulic power pack, HPP
- 34: electrically driven pump, EMP
- 36.1: first hydraulic (sub-)system
- 36.2: second hydraulic (sub-)system
- 38: pressure setting means
- 40: processor
- 42: memory
- 44: user interface
- 46: flight data providing system
- 48: communication connection
- 50: hydraulic motor
- 52: hydraulic cylinder
- 54: flight control surface
- 56: internal pressure relief valve
- 58: ground cart
- 60: shut-off means (e.g., valve)

## Claims

1. Onboard hydraulic system (12) for an aircraft (10), comprising a motor-pump unit (14) comprising an electric motor (16) and a hydraulic pump (18) driven by the motor (16), a hydraulic consumer (24) supplied with pressurized hydraulic fluid from the motor-pump unit (14), a fluid reservoir (20), a pressure sensor (28) for sensing pressure of the pressurized hydraulic fluid, a control unit (26) for controlling the motor-pump unit (14), and a pressure setting means (38) for adapting a pressure setting of the motor-pump unit (14) for ground service or maintenance or specific flight conditions.

2. Hydraulic system (12) according to claim 1, **characterized in that** the control unit (26) is configured to control the motor-pump unit (14) in a first flight mode to supply the pressurized hydraulic fluid with a nominal system operation pressure and in a ground service and/or maintenance and/or testing mode and/or a second flight mode to supply the pressurized hydraulic fluid with a pressure different to the nominal system operation pressure and set by the pressure setting means (38).

3. Hydraulic system (12) according to claim 2, **characterized in that** the pressure setting means (38) is configured to at least one or several of the following:
3.1 set a pressure higher than the nominal system operation pressure for testing a consumer function;
3.2 set a pressure higher than the nominal system operation pressure and below a hydraulic system relief pressure in order to test an internal pressure relief valve (56) of the hydraulic consumer (24) connected to the motor-pump unit (14);
3.3 set a pressure lower than the nominal system operation pressure for ground service, maintenance or testing; and/or
3.4 set a pressure lower than the nominal system operation pressure during ground service and changing to nominal system operation pressure during ground service on demand of the consumer (24) or of at least one of several of the hydraulic consumers (24).

4. Hydraulic system (12) according to any of the preceding claims, comprising a first subsystem (36.1) with a first motor-pump unit (14) for supplying the first subsystem (36.1) with pressurized fluid and a second subsystem (36.2) with a second motor-pump unit (14) for supplying the second subsystem (36.2) of the hydraulic system (12) with pressurized fluid, the first and second motor-pump units (14) being controlled by the control unit (26), wherein the control unit (26) is configured for controlling the first and second motor-pump units (14) during a flight mode such that one of the motor-pump units (14) supplies hydraulic fluid with nominal pressure and the other of the motor-pump units (14) supplies hydraulic fluid with a different pressure set by the pressure setting means (38).

5. Hydraulic system (12) according to any of the preceding claims, wherein the motor-pump unit (14) is chosen from the group consisting of
a hydraulic power pack (32) including the electric motor (16), the pump (18) and the reservoir (20),
an electric motor pump (34),
a motor-pump unit (14) of fixed displacement type and speed-controlled motor,
a motor-pump unit (14) with fixed motor speed and controlled variable displacement, and
a motor-pump unit (14) with controlled variable displacement and controlled motor speed.

6. Use of the hydraulic system (12) according to any of the preceding claims for at least one of the following:
6.1 testing a function of the hydraulic consumer (24), especially testing function of an internal consumer pressure relief valve (56);
6.2 operation of consumer(s) (24) with a flow and/or pressure that is lower as a nominal flow and nominal pressure, respectively, especially when the aircraft (10) is on ground;
6.3 reducing heat load of the hydraulic system (12) when the aircraft (10) is on ground or in a specific flight mode;
6.4 managing power consumption and/or power sharing between several parts (36.1, 36.2) of the hydraulic system (12).

7. Method for operating a hydraulic system (12) according to any of the claims 1 to 5, comprising at least one or several of the steps:
a) testing a function of the hydraulic consumer (24), especially testing function of an internal consumer pressure relief valve (56);
b) operating of consumer(s) (24) with a flow and/or pressure that is lower as a nominal flow and nominal pressure, respectively, especially when the aircraft (10) is on ground;
c) operating of consumer(s) (24) with a pressure lower than nominal pressure for reducing heat load of the hydraulic system when the aircraft (10) is on ground or in a specific flight mode;
d) managing power consumption and/or power sharing between several parts (36.1, 36.2) of the hydraulic system (12), especially during flight.

8. Method according to claim 7, wherein step a) comprises one or several of the steps:
a1) setting the pressure in dependence of the function to be tested;
a2) setting the pressure to a level above nominal pressure but below system relief pressure;
a3) controlling a motor speed and/or pump displacement of the motor-pump unit (14) so that it supplies hydraulic fluid at a pressure at or above a relief pressure of the internal pressure relief valve (56) of the consumer (24);
a4) detecting a pressure and/or flow change in a supply line for supplying the consumer (24) to be tested;
a5) isolate the consumer (24) to be tested from other consumers in the hydraulic system (12);
a6) conducting the test automatically under control of the control unit (26);
a7) controlling the motor-pump unit (14) depending from at least one pressure threshold set by the pressure setting means (38);
a8) feed-back control of the motor-pump unit (14) in order to maintain the higher pressure set by the pressure setting means (38).

9. Method according to any of the claims 8 or 7, wherein step b) comprises one or several of the steps:
b1) controlling a motor speed and/or pump displacement of the motor-pump unit (14) so that it supplies hydraulic fluid at a lower pressure significantly below the nominal system operation pressure,
b2) feed-back control of the motor-pump unit (14) in order to maintain the lower pressure set by the pressure setting means;
b3) controlling a motor speed and/or pump displacement of the motor-pump unit (14) so that it supplies hydraulic fluid at a pressure that raises and/or decreases at a given rate;
b4) moving the consumer (24) with reduced pressure and/or reduced flow;
b5) checking pressure tightness of the hydraulic system (12) at a reduced pressure level or with an increasing pressure;
b6) controlling the motor-pump unit (14) depending from at least one pressure threshold set by the pressure setting means (38).

10. Method according to any of the claims 8 to 9, wherein step c) comprises one or several of the steps:
c1) reducing the pressure whenever the aircraft (10) is on ground and no application with nominal pressure is required;
c2) reverting to nominal pressure when the consumer (24) or at least one of several consumers (24) is requiring it;
c3) detecting fluid temperature and setting the pressure in dependence from the detected fluid temperature;
c4) determining a flight status or flight phase of the aircraft (10) and/or whether the aircraft is on ground;
c4.1) monitoring the position of at least one or several of flight control elements or flight control faces (54);
c5) detecting whether the hydraulic system (12) is running;
c6) detecting whether the temperature of the fluid in the hydraulic system (12) is within a predefined range and if it is too low allowing warming before setting the reduced pressure;
c7) determining if any consumer operation is foreseen and/or anticipating consumer operation;
c8) reducing the pressure setting to less than half, preferably between 0.2 and 0.4 times, of the nominal pressure to slow down warming of the fluid by internal leakage;
c9) controlling the motor-pump unit (14) depending from at least one pressure threshold set by the pressure setting means (38);
c10) changing a motor-pump unit control threshold for the pressure;
c11) informing connected systems about the pressure reduction in order to avoid triggering of low-pressure alerts;
c12) in case of change of the flight phase returning to nominal pressure, preferably by resetting a motor-pump unit control threshold.

11. Method according to any of the claims 8 to 10, wherein step d) comprises one or several of the steps:
d1) reducing pressure in one sub-system (36.1) while maintaining full pressure in the other system (36.2);
d2) sharing the power between subsystems (36.1, 36.2) to balance usage and/or thermal loading and/or wear and/or to adapt electric power network restrictions;
d3) controlling the motor-pump unit (14) in the sub-system (36.1, 36.2) with reduced pressure depending from at least one pressure threshold set by the pressure setting means (38).

12. Hydraulic system (12) according to any of the claims 1 to 5, wherein
12.1 the pressure setting means (38) is part of the control unit (26); and/or
12.2 the control unit (26) is configured to cause the use of claim 6 and/or to cause the hydraulic system (12) to carry out the steps of the method according to any of the claims 7 to 11.

13. Control unit (26) for a hydraulic system (12) according to any of the claims 1 to 5 and 12, configured to automatically control the hydraulic system (12) in the use of claim 6 and/or to cause the hydraulic system (12) to carry out the steps of the method according to any of the claims 7 to 11.

14. Computer program containing instructions that cause a hydraulic system (12) according to any of the claims 1 to 6 and 12 to carry out the method according to any of the claims 7 to 11.

15. Aircraft (10) comprising a hydraulic system (12) according to any of the claims 1 to 6 and 12 or a control unit (26) according to claim 13.
